(19)

(11) **EP 4 696 403 A1**

(12) **EUROPEAN PATENT APPLICATION**
published in accordance with Art. 153(4) EPC

(43) Date of publication:
**18.02.2026 Bulletin 2026/08**

(21) Application number: **24922656.4**

(22) Date of filing: **30.09.2024**

(51) International Patent Classification (IPC):
***B01D 67/00*** *(2006.01)* ***B01D 71/68*** *(2006.01)*

(86) International application number:
**PCT/CN2024/122711**

(87) International publication number:
**WO 2025/260548 (26.12.2025 Gazette 2025/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2024 CN 202410806715**

(71) Applicant: **Alioth Biotech (Shanghai) Co., Ltd**
**Shanghai 201422 (CN)**

(72) Inventors:
- **TAN, Kuitian**
  **Shanghai 201422 (CN)**
- **TANG, Yan**
  **Shanghai 201422 (CN)**

(74) Representative: **Balder IP Law, S.L.**
**Paseo de la Castellana 93**
**5ª planta**
**28046 Madrid (ES)**

(54) **METHOD FOR MODIFYING POLYMER MEMBRANE, MODIFIED POLYMER MEMBRANE, AND FILTERING DEVICE**

(57) A method for modifying a polymer membrane is disclosed and includes: pre-wetting a polymer membrane using a crosslinking agent solution, where the crosslinking agent solution includes a first crosslinking agent and a second crosslinking agent; irradiating the pre-wetted polymer membrane to initiate a crosslinking reaction; and rinsing and drying the polymer membrane after the crosslinking reaction to obtain a modified polymer membrane. The method for modifying the polymer membrane uses two cross-linking agents to modify the polymer membrane, thereby forming a 3D network on the surface and within the bulk of the polymer membrane to obtain a modified polymer membrane. The modified polymer membrane has low protein adsorption, caustic stability, autoclave sterilization stability, and gamma sterilization stability, while retaining the overall mechanical properties to meet the pleatability requirement for filter manufacturing.

EP 4 696 403 A1

## Description

### TECHNICAL FIELD

Various embodiments described in this document relate to the field of biopharmaceuticals, and in particular, relate to a method for modifying a polymer membrane, a modified polymer membrane, and a filtration device.

### BACKGROUND

Membrane-based filtration technology has become one of the effective solutions for protein separation and purification in life sciences due to its low-temperature processing characteristics, high separation efficiency, and cost-effectiveness. However, protein adsorption onto the filter membrane is a long-standing issue, which not only leads to reduced membrane flux, but also leads to increased operational costs and product yield losses. In addition to protein adsorption, according to the requirements of various filtration applications, the filter membrane has the performance of caustic stability, autoclave sterilization stability, and gamma sterilization stability. Moreover, the mechanical properties of the filter membrane should meet pleating requirements for filter manufacturing.

In existing technologies, crosslinking reactions between crosslinking agents and monomers are used to improve the performance of the filter membrane and reduce protein adsorption onto the filter membrane. Crosslinking agents refer to compounds having two or more reactive functional groups. The functional groups include, but are not limited to, vinyl groups (double bond), hydroxyl groups, amide groups, amine groups, and so on. Monomers are compounds with a single functional group, including but not limited to vinyl (double bond), hydroxyl, amide, and amine, etc.

To reduce protein adsorption, Hou et al. discloses in U.S. Patent No. 4921654 a method for preparing a modified microporous membrane having hydroxyl, mercapto, carboxyl, or amino functional groups. This patent discloses a surface grafting process in which glycidyl methacrylate (GMA) is grafted onto a polymer and then reacted with 3-hydroxypropyl acrylate (HPA) to achieve the modification, without using a crosslinking agent. However, it does not address the caustic stability of the membrane, nor does it evaluate the impact of gamma or autoclave sterilization on protein adsorption.

Gsell discloses in U.S. Patent No. 4906374 a method for surface modification of a porous polyamide substrate by radiation induction. This patent discloses a scheme of a monomer containing at least one hydroxyl group, but does not mention a crosslinking agent. It also does not mention the caustic stability of the membrane, nor does it evaluate the impact of gamma sterilization or autoclave sterilization on protein adsorption.

In another U.S. Patent No. 4964989, Gsell proposes a liquophilic porous polymer substrate having a polymer coating designed to impart low affinity to materials containing amide groups. A similar process was proposed in U.S. Patent No. 5019260 for modifying PVDF membranes. In both cases, a monomer with multiple hydroxyl groups and a cross-linking agent were used to modify the membrane, but there is no mention of caustic stability of the membrane or evaluation of gamma sterilization or autoclave sterilization on protein adsorption.

Steuck discloses in U.S. Patent No. 4944879 a method for surface modification of a composite porous membrane by electron beam irradiation using a monomer and a crosslinking agent, or using a monomer and a pre-coated intermediate polymer. The monomers claimed in the patent include hydroxyalkyl acrylates or methacrylates, acrylamides or methacrylamides, and polar or functionally substituted acrylates or methacrylates. It also does not mention the caustic stability of the membrane, nor does it evaluate the impact of gamma sterilization or autoclave sterilization on protein adsorption.

Charkoudian et al. (US20030077435A1, EP1779922A1, U.S. Patent No. 7284668B2, U.S. Application US2012/028630A1) first claimed a method for preparing a thermally stable, clean, and corrosion-resistant porous membrane on a biomolecular resistant surface using a ternary copolymer system including two monomers and one crosslinking agent. In addition, one of the claimed monomers is diacetone acrylamide, which does not exhibit strong corrosion resistance and is listed as "incompatible with strong bases and strong oxidants" in the safety data sheet (SDS).

Thom et al. discloses in US Patent Nos. 2011/0244215A1 and 9045602B2 a method for preparing a microporous membrane by electron beam crosslinking using oligomers without crosslinking agents. The modified membrane has low protein adsorption, but the dose of the electron beam used in the patent is very high (50-200 kGy, with a claimed range of 1-300 kGy), and there is no assessment of caustic stability and membrane pleatability, nor the impact of autoclave sterilization or gamma sterilization on protein adsorption performance.

In view of the above, related modification techniques may employ the technical route of a single crosslinking agent reacting with one or more monomers. Due to the poor caustic stability of acrylate compounds, most modified membranes suffer from poor caustic stability, resulting in a significant decline in membrane performance. Charkoudian noted in US7648034 that when the Durapore® membrane was immersed in a sodium hydroxide solution with a pH of 13 for only two hours, the water flux of the membrane was reduced by 75%.

In view of this, there is a need to develop a method for modifying a polymer membrane using two crosslinking agents to achieve low protein adsorption, caustic stability, autoclave sterilization stability, and gamma sterilization stability, thereby obtaining a high-performance modified polymer membrane.

## SUMMARY

In order to overcome the deficiencies of the related art, one objective of the present disclosure is to provide a method for modifying a polymer membrane, another objective of the present disclosure is to provide a modified polymer membrane, and still another objective of the present disclosure is to provide a filtration device. To achieve the above-mentioned objectives, the technical solutions employed by the present disclosure are as follows.

One aspect of the present disclosure provides a method for modifying a polymer membrane, including the following steps:

pre-wetting a polymer membrane with a crosslinking agent solution, where the crosslinking agent solution includes a first crosslinking agent and a second crosslinking agent;
irradiating the pre-wetted polymer membrane to initiate a crosslinking reaction between the first crosslinking agent and the second crosslinking agent on the polymer membrane; or to initiate a crosslinking reaction among the first crosslinking agent, the second crosslinking agent, and the polymer membrane;
rinsing and drying the polymer membrane after the crosslinking reaction to obtain a modified polymer membrane.

In some embodiments, the polymer membrane, the first crosslinking agent, and the second crosslinking agent each generate free radicals upon irradiation, and the free radicals undergo crosslinking reactions thereby forming a three-dimensional crosslinked network on the surface and within the bulk of the polymer membrane.

In some embodiments, the first crosslinking agent and the second crosslinking agent each generate free radicals upon irradiation, and the free radicals undergo crosslinking reactions thereby forming a three-dimensional crosslinked network on the surface and within the bulk of the polymer membrane.

In some embodiments, the first crosslinking agent is a hydrophilic organic compound containing two or more first active reactive functional groups.

In some embodiments, the first active reactive functional group is a bisacrylamide group.

In some embodiments, the first active reactive functional group includes at least one selected from the group consisting of N,N'-methylenebisacrylamide and N,N'-ethylenebisacrylamide.

In some embodiments, the second crosslinking agent is a hydrophilic organic compound containing two or more second active reactive functional groups.

In some embodiments, the second active reactive functional group is an acrylate group.

In some embodiments, the second active reactive functional group includes at least two acrylate bonds.

In some embodiments, the concentration of the first crosslinking agent is 0.3-0.8 wt%, and the concentration of the second crosslinking agent is 1.0-3.0 wt%.

In some embodiments, irradiating the pre-wetted polymer membrane includes irradiating the pre-wetted polymer membrane with at least one selected from electron beam, X-RAY, ultraviolet (UV) radiation, gamma radiation, plasma, and thermal energy.

In some embodiments, the dose of the electron beam is 10-50 kGy.

In some embodiments, the rinsing employs an alcohol-based solution.

In some embodiments, after the rinsing is completed, the alcohol-based solution is exchanged with distilled water.

In some embodiments, when the polymer membrane is a hydrophobic membrane, the crosslinking agent solution further includes an aqueous solution of a low-molecular-weight alcohol.

In some embodiments, the polymer membrane is a microporous membrane.

In some embodiments, the polymer membrane includes one selected from the group consisting of polysulfone, polyethersulfone, polyarylsulfone, polyvinylidene fluoride, polytetrafluoroethylene, cellulose acetate, cellulose nitrate, polypropylene, polyethylene, polyolefin polymer, polyamide, polyimide, acrylic polymer, methacrylic polymer, or the polymer is prepared from a copolymer or blend of more than one selected from the above group.

In some embodiments, the protein adsorption amount of the modified polymer membrane is less than or equal to 55 $\mu g/cm^2$.

In some embodiments, the modified polymer membrane has a wet time of less than or equal to 5 seconds.

In some embodiments, the modified polymer membrane has a change of less than or equal to 20% in each of water flux and bubble point compared to the polymer membrane.

In some embodiments, the modified polymer membrane has caustic stability.

In some embodiments, after caustic disinfection, the modified polymer membrane has a wet time of less than or equal to 5 seconds, and changes in water flux and bubble point each less than or equal to 20%, and a protein adsorption amount less than or equal to 55 $\mu g/cm^2$.

In some embodiments, the modified polymer membrane has autoclave sterilization stability.

In some embodiments, after autoclave sterilization, the modified polymer membrane has a wet time of less than or equal to 5 seconds, and changes in water flux and bubble point each less than or equal to 20%, and a protein adsorption amount less than or equal to 55 $\mu g/cm^2$.

In some embodiments, the modified polymer membrane has gamma sterilization stability.

In some embodiments, after gamma sterilization, the modified polymer membrane has a wet time of less than or equal to 5 seconds, changes in water flux and bubble point each less than or equal to 20%, and a protein adsorption amount of less than or equal to 55 $\mu g/cm^2$.

Another aspect of the present disclosure provides a modified polymer membrane, where the modified polymer membrane is obtained by modifying the polymer membrane using the aforementioned methods of modifying a polymer membrane.

In some embodiments, the polymer membrane is a microporous membrane.

In some embodiments, the polymer membrane includes one selected from the group consisting of polysulfone, polyethersulfone, polyarylsulfone, polyvinylidene fluoride, polytetrafluoroethylene, cellulose acetate, cellulose nitrate, polypropylene, polyethylene, polyolefin polymer, polyamide, polyimide, acrylic polymer, methacrylic polymer, or the polymer is prepared from a copolymer or blend of more than one selected from the above group.

In some embodiments, the protein adsorption amount of the modified polymer membrane is less than or equal to 55 $\mu g/cm^2$.

In some embodiments, the modified polymer membrane has a wet time of less than or equal to 5 seconds.

In some embodiments, the modified polymer membrane has a change of less than or equal to 20% in each of water flux and bubble point compared to the polymer membrane.

In some embodiments, the modified polymer membrane has caustic stability.

In some embodiments, after caustic disinfection, the modified polymer membrane has a wet time of less than or equal to 5 seconds, and changes in water flux and bubble point each less than or equal to 20%, and a protein adsorption amount less than or equal to 55 $\mu g/cm^2$.

In some embodiments, the modified polymer membrane has autoclave sterilization stability.

In some embodiments, after autoclave sterilization, the modified polymer membrane has a wet time of less than or equal to 5 seconds, and changes in water flux and bubble point each less than or equal to 20%, and a protein adsorption amount less than or equal to 55 $\mu g/cm^2$.

In some embodiments, the modified polymer membrane has gamma sterilization stability.

In some embodiments, after gamma sterilization, the modified polymer membrane has a wet time of less than or equal to 5 seconds, changes in water flux and bubble point each less than or equal to 20%, and a protein adsorption amount of less than or equal to 55 $\mu g/cm^2$.

In some embodiments, the modified polymer membrane is applied to a filtration device.

Still another aspect of the disclosure provides a filtration device including a housing, the housing having a fluid inlet and a fluid outlet, and there is disposed in the housing the modified polymer membrane as described above.

The method for modifying a polymer membrane according to the present disclosure uses two cross-linking agents to modify the polymer membrane so as to form a 3D network on the surface and within the bulk of the polymer membrane, thereby obtaining a modified polymer membrane. The modified polymer membrane according to the present disclosure exhibits low protein adsorption, caustic stability, autoclave sterilization stability, and gamma sterilization stability, while retaining the overall mechanical properties to meet the pleatability requirement for filter manufacturing. The method for modifying a polymer membrane and the modified polymer membrane according to the present disclosure demonstrate significant utility and beneficial outcomes.

## DETAILED DESCRIPTION OF THE EMBODIMENTS

To further illustrate the present disclosure more clearly, the following description is provided in conjunction with some illustrative embodiments of the present disclosure. It should be understood by those skilled in the art that the specific content described below is illustrative rather than limiting and should not be construed as limiting the scope of protection of the present disclosure.

The polymer membrane described in the present disclosure includes one selected from the group consisting of polysulfone, polyethersulfone, polyarylsulfone, polyvinylidene fluoride, polytetrafluoroethylene, cellulose acetate, cellulose nitrate, polypropylene, polyethylene, polyolefin polymer, polyamide, polyimide, acrylic polymer, and methacrylic polymer, or is prepared from a copolymer or blend of more than one selected from the above group.

The method for modifying the polymer membrane of the present disclosure is as follows:

pre-wetting a polymer membrane with a crosslinking agent solution, where the crosslinking agent solution includes a first crosslinking agent and a second crosslinking agent;

irradiating the pre-wetted polymer membrane to initiate a crosslinking reaction between the first crosslinking agent and the second crosslinking agent on the polymer membrane or to initiate a crosslinking reaction among the first crosslinking agent, the second crosslinking agent, and the polymer membrane; and

rinsing and drying the polymer membrane after the crosslinking reaction to obtain a modified polymer membrane.

When the polymer membrane is a hydrophilic membrane, the crosslinking agent solution includes the first crosslinking agent and the second crosslinking agent. Specifically, the first crosslinking agent and the second crosslinking agent may be dissolved in an aqueous solution to obtain the crosslinking agent solution. When the polymer membrane is a hydrophobic membrane, the crosslinking agent solution includes the first crosslinking agent, the second crosslinking agent, and an aqueous solution of a low-molecular-weight alcohol. Specifically, the first crosslinking agent and the second crosslinking agent may be dissolved in the aqueous solution of the low-molecular-weight alcohol to obtain the crosslinking agent solution. The aqueous solution of low-molecular-weight alcohol serves to assist in wetting the hydrophobic membrane.

After irradiating the pre-wetted polymer membrane, some polymer membranes may participate in the cross-linking reaction (such as PVDF or nylon membrane). That is, a crosslinking reaction may occur among the first crosslinking agent, the second crosslinking agent, and the polymer membrane. Specifically, the polymer membrane, the first cross-linking agent, and the second crosslinking agent may each generate free radicals upon irradiation. The crosslinking reaction may occur among the identical or different free radicals, thereby forming a three-dimensional crosslinked network on the surface and within the bulk of the polymer membrane. Some polymer membranes may not participate in the crosslinking reaction (e.g., PES membrane may not participate in the reaction at room temperature and low dose), in which case the crosslinking reaction may occur only between the first and second crosslinking agents on the polymer membrane. Specifically, the first crosslinking agent and the second crosslinking agent may each generate free radicals upon irradiation. The crosslinking reaction may occur among the identical or different free radicals, thereby forming a three-dimensional crosslinked network on the surface and within the bulk of the polymer membrane.

In order to ensure the hydrophilicity of the modified polymer membrane, the first crosslinking agent and the second crosslinking agent may be selected from hydrophilic organic compounds. For the convenience of comparison, the polymer membrane described in the embodiments of the present disclosure and the comparative examples use a polyethersulfone (PES) membrane (PES), which is a hydrophobic membrane and does not participate in the cross-linking reaction at room temperature and low dose. When a hydrophilic polymer membrane or a polymer membrane that participates in a cross-linking reaction is used for modification, the formulation of the crosslinking agent solution and the cross-linking reaction may differ as described above, but the experimental results are similar.

The polyethersulfone (PES) membrane used in this disclosure is a hydrophobic PES membrane prepared in the laboratory based on the formulation disclosed in patent application number US2023/0017950A1. The coating solution of the hydrophobic polyethersulfone (PES) membrane may be composed of 15-20 wt% PES resin, N-methyl-2-pyrrolidone (NMP) as a solvent, and triethylene glycol (TEG) as a non-solvent. The initial membrane may be formed on a heated glass plate, then exposed to air under appropriate humidity conditions, and finally immersed in a formation bath primarily composed of water, where the final solvent-non-solvent exchange and extraction and final membrane formation take place to obtain the polymer membrane. The polymer membrane may be a microporous membrane and may specifically be a polyethersulfone (PES) membrane. After drying, the polymer membrane may be wetted with 99.5% or more isopropyl alcohol (IPA), and the membrane sample of the polymer membrane may be tested by a pore size analyzer (Innova CFP-200A model), yielding a bubble point pressure of 15-30 psi and an average thickness of 130 $\pm$ 20 $\mu$m. The embodiments and comparative examples in this disclosure use the polymer membrane for modification, and the modified polymer membrane is subjected to water flux test, bubble point test, protein adsorption test, and stability tests of caustic disinfection, high pressure sterilization, and gamma sterilization, etc., to test the performance of the modified polymer membrane.

The present disclosure uses at least one selected from electron beam, X-RAY, ultraviolet (UV) radiation, gamma radiation, plasma, and thermal energy to irradiate the pre-wetted polymer membrane, thereby modifying the polymer membrane. For convenience of comparison, the embodiments of the present disclosure and the comparative examples both use electron beam to modify the polymer membrane, where the dose of the electron beam is 10-50kGy. Specifically, the embodiments of the present disclosure and the comparative examples both use 30kGy electron beam to irradiate the polymer membrane. When the polymer membrane is irradiated with other doses of electron beam, the experimental results are similar. The specific steps are as follows.

The polymer membrane is cut into pieces with a rough size of not less than 7 inches * 7 inches, and then stored in a 2 mil polyethylene (PE) bag. The polymer membrane is pre-wetted with a crosslinking agent solution, where the crosslinking agent solution includes a first crosslinking agent, a second crosslinking agent, and an aqueous solution of a low-molecular-weight alcohol. Specifically, the crosslinking agent solution is prepared by dissolving a specified amount of the first crosslinking agent and the second crosslinking agent in a 10wt% aqueous solution of the low-molecular-weight alcohol. Specifically, the aqueous solution of the low-molecular-weight alcohol may be IPA, which facilitates the wetting of the hydrophobic polymer membrane. Specifically, the first crosslinking agent may be a hydrophilic organic compound containing two or more first active reactive functional groups. More specifically, the first active reactive functional group may be a bisacrylamide group, such as N,N'-methylenebisacrylamide, N,N'-ethylenebisacrylamide, etc. The second crosslinking agent is a hydrophilic organic compound containing two or more second active reactive functional groups. The second active reactive functional group is an acrylate group. Specifically, the second crosslinking agent includes at least two acrylate bonds, which may be selected from compounds such as ethoxylated trimethylolpropane triacrylate or propoxylated trimethylolpropane triacrylate. After fully immersing the polymer membrane in the crosslinking agent solution, a rubber roller is used to remove the excess crosslinking agent solution on the polymer membrane.

The pre-wetted polymer membrane is irradiated with an electron beam to initiate a crosslinking reaction, thereby forming a 3D network structure on the surface and within the bulk of the polymer membrane. Specifically, the polymer membrane is exposed to an electron beam at a specified acceleration voltage and dose in a nitrogen atmosphere at a linear speed of 15 to 30 feet per minute. The first crosslinking agent and the second crosslinking agent each generate free radicals upon irradiation, and the crosslinking reaction may occur among the identical or different free radicals, thereby forming a three-dimensional crosslinked network on the surface and within the bulk of the polymer membrane.

After electron beam irradiation, the polymer membrane is removed from the PE bag and rinsed with isopropyl alcohol (IPA). Following rinsing, the IPA is exchanged with pure water. The rinsed polymer membrane is then air-dried overnight to obtain the modified polymer membrane.

Performance tests of the modified polymer membrane are conducted as follows.

I. Performance Testing of Modified Polymer Membrane

The performance tests of the modified polymer membrane include wet time, water flux, bubble point, protein adsorption, etc. Specifically, the modified polymer membrane is first rinsed in IPA, then thoroughly rinsed in deionized water, and air-dried overnight prior to testing the performance of the polymer membrane. The test method is as follows.

1. Wet Time

Wet time is determined using the test method described in patent application US2023/0017950A1, which involves placing a droplet (30-60 μL) of a 10% NaCl aqueous solution on the surface of the modified polymer membrane and recording the time (in seconds) required for the modified polymer membrane to become wetted through. Specifically, the wetted part of the modified polymer film becomes clear as the liquid penetrates through it, in comparison to the non-wetted part. The time required for the wetted portion of the surface of the modified polymer membrane to become clear is recorded. A wet time of ≤5 seconds is generally considered instantaneous wettable.

2. Water Flux

The modified polymer membrane is cut into 47 mm discs, wetted with water, and placed on the filter holder. The filter holder is connected to a pressurized water tank, and water is passed through the modified polymer membrane at a pressure difference of 14.5 psi. After reaching the equilibrium state, the water flux through the modified polymer membrane is measured in liters/square meter/hour/(lbs/square inch), that is, LMH/psi.

3. Bubble Point Testing

The modified polymer membrane is cut into 47 mm discs and wetted with IPA as a wetting agent. Bubble point testing is then conducted according to ASTM F316 standard using a pore size analyzer (Innova CFP-200A). The bubble point test can measure the pore size of the modified polymer membrane, and the bubble point is inversely proportional to the pore size.

4. Protein Adsorption Testing (Refer to Patent EP 3586948 A1)

The protein adsorption of the modified polymer membrane is measured using a static soaking test with IgG protein. A protein solution is prepared using the model protein IgG (human IgG, ≥99%, Sigma-Aldrich Co.) in phosphate buffered saline (PBS, SigmaAldrich Co., LLC) at pH 7.4, and the concentration of the protein solution is 1 mg/ml. The modified polymer membrane is cut into multiple 13 mm discs (at least three for each membrane group). One of the disc samples is placed in a 5 ml PTFE tube, and 2 ml of the protein solution is added using a calibrated micropipette. Three additional test tubes without disc samples serve as as negative comparatives. All the test tubes are placed on the support of a rotary shaker at a rotational speed of 20 rpm and at ambient temperature for two hours. The test tubes are then transferred to a clean UV cuvettes and the absorbance is measured at 280 nm using the UV spectrophotometer (Thermo Fisher, Evolution One). The amount of IgG adsorbed on the membrane surface is determined by constructing a calibration curve using 0.25 mg/ml, 0.5 mg/ml, 0.75 mg/ml and 1.0 mg/ml IgG solutions. Based on the calibration curve, the protein adsorption amount adsorbed on each disc is calculated by the following formula:

$$\text{Protein adsorption amount } (\mu g/cm^2) = \text{absorbance}_{\text{sample}} / \text{absorbance}_{\text{negative comparative}} * \text{IgG solution concentration} * \text{protein solution volume} / \text{membrane area}$$

II. Performance Testing of Modified Polymer Membrane After Disinfection or Sterilization

After the polymer membrane is modified by electron beam irradiation, the modified polymer membrane is disinfected or sterilized, specifically including:

1. Caustic Disinfection: Soaking in 1N (equivalent concentration) sodium hydroxide (NaOH, pH=14) aqueous solution at ambient temperature for at least 72 hours;
2. Autoclave sterilization: Autoclave sterilization at 126°C for 1 hour;
3. Gamma sterilization: Gamma radiation sterilization with a dose of not less than 45kGy.

The aforementioned test methods are used to perform performance tests on the modified polymer membrane after caustic disinfection, autoclave sterilization, and gamma sterilization, including wet time, water flux, bubble point, protein adsorption, etc.

Comparative example 1:

The polymer membrane is pre-wetted with a crosslinking agent solution, which includes a first crosslinking agent, a second crosslinking agent, and an aqueous solution of a low-molecular-weight alcohol. The first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.1wt% MBAM and 3wt% ETMPTA are dissolved in 10wt% IPA to prepare the crosslinking agent solution. Specifically, after the polymer membrane is fully impregnated with the crosslinking agent solution, the excess crosslinking agent solution on the polymer membrane is removed by a rubber roller.

The pre-wetted polymer membrane is irradiated with a 30kGy electron beam to initiate the first crosslinking agent and the second crosslinking agent to undergo a crosslinking reaction on the polymer membrane. Specifically, the first crosslinking agent and the second crosslinking agent respectively generate their own free radicals after irradiation, and the crosslinking reaction may occur among the identical or different free radicals, thereby forming a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and these membrane samples are labeled as Comparative example 1.1 and Comparative example 1.3.

Comparative example 2:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.1wt% MBAM and 4wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and the modified membrane samples are labeled as Comparative Example 2.1 and Comparative Example 2.3.

Comparative example 3:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.2wt% MBAM and 3.5wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and the modified membrane samples are labeled as Comparative Example 3.1 and Comparative Example 3.3.

Embodiment 1:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.3wt% MBAM and 1wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respectively generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and the modified membrane samples are numbered as Embodiment 1.1, Embodiment 1.5, and Embodiment 1.6.

Embodiment 2:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.3wt% MBAM and 2wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain a modified membrane sample for testing. The modified membrane samples are numbered as Embodiment 2.1, Embodiment 2.2, Embodiment 2.5, and Embodiment 2.6.

Embodiment 3:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.3wt% MBAM and 3wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into a specific size to obtain a modified membrane sample for testing, and the membrane sample is numbered as Embodiment 3.1.

Embodiment 4:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.4wt% MBAM and 1wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is then cut into a specific size to obtain a modified membrane sample for testing, and the modified membrane sample is numbered as Embodiment 4.1.

Embodiment 5:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.4wt% MBAM and 2wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent

and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is then cut into a specific size to obtain a modified membrane sample for testing, and the modified membrane sample is numbered as Embodiment 5.1.

Embodiment 6:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.4wt% MBAM and 3wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and these modified membrane samples are numbered as Embodiment 6.1, Embodiment 6.2, Embodiment 6.3, Embodiment 6.4, and Embodiment 6.7.

Embodiment 7:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.6wt% MBAM and 1wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and the modified membrane samples are numbered as Embodiment 7.1, Embodiment 7.3, and Embodiment 7.4.

Embodiment 8:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.6wt% MBAM and 2wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane·. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and the modified membrane samples are numbered as Embodiment 8.1, Embodiment 8.3, and Embodiment 8.4.

Embodiment 9:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.6wt% MBAM and 3wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and these modified membrane samples are numbered as Embodiment 9.1 and Embodiment 9.7.

Embodiment 10:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.8wt% MBAM and 1wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and these modified membrane samples are numbered as Embodiment 10.1 and Embodiment 10.7.

Embodiment 11:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.8wt% MBAM and 2wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is then cut into a specific size to obtain a modified membrane sample for testing, and the modified membrane sample is numbered as Embodiment 11.1.

Embodiment 12:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.8wt% MBAM and 3wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and these modified membrane samples are numbered as Embodiment 12.1, Embodiment 12.3, Embodiment 12.4, Embodiment 12.5, and Embodiment 12.7.

Comparative example 4:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.8wt% MBAM and 4wt% ETMPTA are dissolved in 10wt% IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and these modified membrane samples are numbered as Comparative example 4.1, Comparative example 4.2, Comparative example 4.3, and Comparative example 4.4.

Comparative example 5:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 0.8 wt% of MBAM and 6 wt% of ETMPTA are dissolved in 10 wt% of IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and these modified membrane samples are numbered as Comparative example 5.1, Comparative example 5.3, and Comparative example 5.4.

Comparative example 6:

The polymer membrane is pre-wetted with a crosslinking agent solution, which includes a first crosslinking agent, a second crosslinking agent, and an aqueous solution of a low-molecular-weight alcohol, where the first crosslinking agent is N,N-methylenebisacrylamide (MBAM), the second crosslinking agent is ethoxylated trimethylolpropane triacrylate (ETMPTA), and the aqueous solution of the low-molecular-weight alcohol is isopropyl alcohol (IPA). Specifically, 1.2 wt% of MBAM and 9 wt% of ETMPTA are dissolved in 10 wt% of IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate the first crosslinking agent and the second crosslinking agent to undergo a crosslinking reaction on the polymer membrane. Specifically, the first crosslinking agent and the second crosslinking agent respective generate their own free radicals after irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and the modified membrane samples are labeled as Comparative Example 6.1 and Comparative Example 6.2.

Comparative example 7:

The polymer membrane is pre-wetted with a crosslinking agent solution, which includes a first crosslinking agent and an aqueous solution of a low-molecular-weight alcohol, where the first crosslinking agent is N,N-methylenebisacrylamide (MBAM), and the aqueous solution of the low-molecular-weight alcohol is isopropyl alcohol (IPA). Specifically, 1.2 wt% of MBAM is dissolved in 10 wt% of IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate a crosslinking reaction of the first crosslinking agent on the polymer membrane. Specifically, the first crosslinking agent generates free radicals upon irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into a specific size to obtain a modified membrane sample for testing, and this modified membrane sample is numbered as Comparative example 7.1.

Comparative example 8:

The polymer membrane is pre-wetted with a crosslinking agent solution, the crosslinking agent solution including a second crosslinking agent and an aqueous solution of a low-molecular-weight alcohol, where the second crosslinking agent is ethoxylated trimethylolpropane triacrylate (ETMPTA), and the aqueous solution of low-molecular-weight alcohol is isopropyl alcohol (IPA). Specifically, 4wt% of ETMPTA is dissolved in 10wt% of IPA to prepare the crosslinking agent solution. Specifically, after the polymer membrane is completely impregnated with the crosslinking agent solution, the excess crosslinking agent solution on the polymer membrane is removed using a rubber roller.

The pre-wetted polymer membrane is irradiated with a 30 kGy electron beam to initiate a crosslinking reaction of the second crosslinking agent on the polymer membrane. Specifically, the second crosslinking agent generates free radicals upon irradiation, and the crosslinking reaction may occur among the identical or different free radicals, thereby generating a three-dimensional crosslinked network on the surface and within the bulk of the polymer membrane.

The polymer membrane after the crosslinking reaction is rinsed and dried to obtain a modified polymer membrane. The rinsing is performed with an alcohol-based solution. After the rinsing is completed, the alcohol-based solution is exchanged with distilled water to obtain a modified polymer membrane.

The modified polymer membrane is cut into specific sizes to obtain modified membrane samples for testing, and the modified membrane samples are labeled as Comparative Example 8.1 and Comparative Example 8.3.

Embodiment 13:

This embodiment tests the wettability of the modified membrane samples described in Embodiments 1-12 and Comparative examples 1-8, and studies the effects of different ratios of the first crosslinking agent and the second crosslinking agent on the wettability of the modified membrane samples. The test results are shown in the following Table 1.

Table 1

| | First crosslinking agent | | Second crosslinking agent | | Wet time(s) |
|---|---|---|---|---|---|
| | Name | wt% | Name | wt% | After modification |
| Comparative example 1.1: | MBAM | 0.1 | ETMPTA | 3.0 | 1.5 |
| Comparative example 2.1: | MBAM | 0.1 | ETMPTA | 4.0 | <1 |
| Comparative example 3.1: | MBAM | 0.2 | ETMPTA | 3.5 | <1 |
| Embodiment 1.1: | MBAM | 0.3 | ETMPTA | 1.0 | <1 |
| Embodiment 2.1: | MBAM | 0.3 | ETMPTA | 2.0 | 3.3 |
| Embodiment 3.1: | MBAM | 0.3 | ETMPTA | 3.0 | <1 |
| Embodiment 4.1: | MBAM | 0.4 | ETMPTA | 1.0 | <1 |
| Embodiment 5.1: | MBAM | 0.4 | ETMPTA | 2.0 | 2 |
| Embodiment 6.1: | MBAM | 0.4 | ETMPTA | 3.0 | <1 |
| Embodiment 7.1: | MBAM | 0.6 | ETMPTA | 1.0 | 1.5 |
| Embodiment 8.1: | MBAM | 0.6 | ETMPTA | 2.0 | <1 |
| Embodiment 9.1: | MBAM | 0.6 | ETMPTA | 3.0 | <1 |
| Embodiment 10.1: | MBAM | 0.8 | ETMPTA | 1.0 | <1 |
| Embodiment 11.1: | MBAM | 0.8 | ETMPTA | 2.0 | <1 |
| Embodiment 12.1: | MBAM | 0.8 | ETMPTA | 3.0 | <1 |
| Comparative example 4.1: | MBAM | 0.8 | ETMPTA | 4.0 | <1 |
| Comparative example 5.1: | MBAM | 0.8 | ETMPTA | 6.0 | <1 |
| Comparative example 6.1: | MBAM | 1.2 | ETMPTA | 9.0 | <1 |
| Comparative example 7.1: | MBAM | 1.2 | | - | <1 |
| Comparative example 8.1: | - | - | ETMPTA | 4.0 | <1 |

According to the test results shown in Table 1, the wet times of Embodiments 1.1-12.1 and Comparative examples 1.1-8.1 are each less than 5 seconds, indicating instantaneous wetting.

Embodiment 14:

This embodiment tests the water flux and bubble point of the modified membrane samples described in Embodiment 2, Embodiment 6, Comparative example 4, and Comparative example 6. The test results are shown in the following Table 2.

Table 2

| | First crosslinking agent | | Second crosslinking agent | | Water flux (LMH/psi) | | Bubble point value (psi) | |
|---|---|---|---|---|---|---|---|---|
| | Name | wt% | Name | wt% | Before modification | After modification | Before modification | After modification |
| Embodiment 2.2: | MBAM | 0.3 | ETMPTA | 2.0 | 134 | 134 | 26.8 | 27.5 |
| Embodiment 6.2: | MBAM | 0.4 | ETMPTA | 3.0 | 124 | 119 | 22.1 | 24.3 |
| Comparative example 4.2: | MBAM | 0.8 | ETMPTA | 4.0 | 118 | 70 | 17.2 | 17.4 |
| Comparative example 6.2: | MBAM | 1.2 | ETMPTA | 9.0 | 86 | No Flow | 22.4 | 26.9 |

According to the test results in Table 2, the use of relatively low concentrations of the first crosslinking agent and the second crosslinking agent (Embodiment 2.2, Embodiment 6.2) has no significant effect on the water flux and bubble point of the polymer membrane before and after modification. However, when relatively high concentrations of the first crosslinking agent and the second crosslinking agent (Comparative Example 4.2, Comparative Example 6.2) are used, some membrane pores of the polymer membrane may be blocked, thereby significantly reducing the water flux.

Embodiment 15:

This embodiment tests the caustic stability of the modified membrane samples described in Embodiments 6, 7, 8, 12 and Comparative examples 1-5 and Comparative example 8. Specifically, the wet time and water flux of the modified membrane sample after caustic disinfection are compared with its wet time and water flux before caustic disinfection. If the wet time of the modified membrane sample after disinfection is still less than 5 seconds and the water flux changes by less than 20%, it indicates that the modified polymer membrane has caustic stability. Specifically, the caustic disinfection step includes: soaking the modified membrane sample in 1N NaOH solution for more than 72 hours, thoroughly rinsing the modified membrane sample with distilled water, and air-drying overnight, and baking the modified membrane sample in an oven at 135°C for 2 hours prior to testing. The test results of the wet times of the modified membrane samples are shown in the following Table 3, and the test results of the water fluxes of the modified membrane samples are shown in Table 4.

Table 3

| | First crosslinking agent | | Second crosslinking agent | | Wet time(s) | |
|---|---|---|---|---|---|---|
| | Name | wt% | Name | wt% | Before caustic alkali disinfection | After caustic alkali disinfection |
| Comparative example 1.3: | MBAM | 0.1 | ETMPTA | 3.0 | 1.5 | > 10 |
| Comparative example 2.3: | MBAM | 0.1 | ETMPTA | 4.0 | < 1 | >5 |
| Comparative example 3.3: | MBAM | 0.2 | ETMPTA | 3.5 | < 1 | >5 |
| Embodiment 6.3: | MBAM | 0.4 | ETMPTA | 3.0 | < 1 | < 1 |
| Embodiment 7.3: | MBAM | 0.6 | ETMPTA | 1.0 | < 1 | < 1 |

(continued)

| | First crosslinking agent | | Second crosslinking agent | | Wet time(s) | |
|---|---|---|---|---|---|---|
| | Name | wt% | Name | wt% | Before caustic alkali disinfection | After caustic alkali disinfection |
| Embodiment 8.3: | MBAM | 0.6 | ETMPTA | 2.0 | < 1 | < 1 |
| Embodiment 12.3: | MBAM | 0.8 | ETMPTA | 3.0 | < 1 | < 1 |
| Comparative example 4.3: | MBAM | 0.8 | ETMPTA | 4.0 | < 1 | < 1 |
| Comparative example 5.3: | MBAM | 0.8 | ETMPTA | 6.0 | < 1 | < 1 |
| Comparative example 8.3: | - | - | ETMPTA | 4.0 | < 1 | > 10 |

Table 4

| | First crosslinking agent | | Second crosslinking agent | | Water flux (LMH/psi) | |
|---|---|---|---|---|---|---|
| | Name | wt% | Name | wt% | Before caustic alkali disinfection | After caustic alkali disinfection |
| Embodiment 6.4: | MBAM | 0.4 | ETMPTA | 3.0 | 416 | 417 |
| Embodiment 7.4: | MBAM | 0.6 | ETMPTA | 1.0 | 282 | 313 |
| Embodiment 8.4: | MBAM | 0.6 | ETMPTA | 2.0 | 457 | 443 |
| Embodiment 12.4: | MBAM | 0.8 | ETMPTA | 3.0 | 279 | 235 |
| Comparative example 4.4: | MBAM | 0.8 | ETMPTA | 4.0 | 70 | 66 |
| Comparative example 5.4: | MBAM | 0.8 | ETMPTA | 6.0 | 90 | 85 |

According to the test results in Table 3, the modified membrane samples treated with low concentrations or no MBAM (Comparative examples 1.3-3.3, Comparative example 8.3) have significantly reduced wettability after immersion in NaOH. In contrast, Embodiments 6.3-8.3 and Embodiment 12.3 still maintain wettability after caustic disinfection.

In the related art, as described by Charkoudian in US7648034, when the Durapore® membrane was immersed in a sodium hydroxide solution at pH=13 for only two hours, the water flux of the membrane was reduced by 75%. However, according to the test results in Table 4, after caustic disinfection, the water flux of Embodiments 6.4-8.4, Embodiment 12.4, and Comparative Examples 4.4-5.4 did not change significantly, indicating the importance of MBAM in modification and emphasizing the importance of MBAM concentration in ensuring the caustic stability of the modified membrane sample in a harsh environment with a high pH level (pH 14).

In summary, the test results of this embodiment show that the concentration of MBAM needs to be greater than 0.2wt% to ensure the caustic stability of the modified membrane sample.

Embodiment 16:

This embodiment tests the autoclave sterilization stability of the modified membrane samples described in Embodiments 1, 2, and 12. Specifically, before the test, the wet modified membrane sample is first air-dried, and then the modified membrane sample is dried at 100°C for 2 hours. Specifically, the wet time, water flux, and bubble point of the modified membrane sample after autoclave sterilization are compared with those before sterilization. If after sterilization, the wet time of the modified membrane sample is still less than 5 seconds, the water flux changes by less than 20%, and the bubble point changes by less than 20%, then it indicates that the modified membrane sample has autoclave sterilization stability. The test results are shown in the following Table 5.

Table 5

| | First crosslinking agent | | Second crosslinking agent | | Electron beam dose (kGy) | Wet time(s) | | Water flux (LMH/psi) | | Bubble point value (psi) | |
|---|---|---|---|---|---|---|---|---|---|---|---|
| | Name | wt% | Name | wt% | | Before autoclave sterilization | After autoclave sterilization | Before autoclave sterilization | After autoclave sterilization | Before autoclave sterilization | After autoclave sterilization |
| Embodiment 1.5: | MBAM | 0.3 | ETMPTA | 1 | 30 | <1 | <1 | 452 | 502 | 22.1 | 20 |
| Embodiment 2.5: | MBAM | 0.3 | ETMPTA | 2 | 30 | 2 | <1 | 283 | 301 | 18.5 | 18.3 |
| Embodiment 12.5: | MBAM | 0.8 | ETMPTA | 3 | 30 | <1 | <1 | 177 | 181 | 16.6 | 15.8 |

According to the test results in Table 5, compared with the modified membrane sample before autoclave sterilization, the wet time, water flux, and bubble point of the modified membrane sample after autoclave sterilization have no significant changes. That is, the modified membrane sample has autoclave sterilization stability.

Embodiment 17:

This embodiment tests the gamma sterilization stability of the modified membrane samples described in Embodiments 1 and 2. Specifically, the modified membrane samples are irradiated with gamma radiation of ≥45 kGy for gamma sterilization. Specifically, before the test, the wet modified membrane sample is first air-dried and then dried at 100°C for 2 hours. Specifically, the wet time, water flux, and bubble point of the modified membrane sample after gamma sterilization are compared with those before sterilization. If after sterilization, the wet time of the modified membrane sample is still less than 5 seconds, the water flux changes by less than 20%, and the bubble point changes by less than 20%, then it is considered that the modified polymer membrane has gamma sterilization stability. The test results are shown in the following Table 6.

Table 6

| Embodiment | First crosslinking agent | | Second crosslinking agent | | Electron beam dose (kGy) | Wet time(s) | | Water flux (LMH/psi) | | Bubble point value (psi) | |
|---|---|---|---|---|---|---|---|---|---|---|---|
| | Name | wt% | Name | wt% | | Before gamma sterilization | After gamma sterilization | Before gamma sterilization | After gamma sterilization | Before gamma sterilization | After gamma sterilization |
| Embodiment 1.6: | MBAM | 0.3 | ETMPTA | 1.0 | 30 | 1 | 1 | 274 | 294 | 19.1 | 18.6 |
| Embodiment 2.6: | MBAM | 0.3 | ETMPTA | 2.0 | 30 | 2.5 | 3 | 193 | 191 | 15.6 | 14.1 |

According to the test results in Table 6, the modified membrane sample is exposed to gamma radiation with a dose of 49 kGy for sterilization. Compared with the modified membrane sample before gamma sterilization, the wet time, water flux, and bubble point of the modified membrane sample after gamma sterilization do not change significantly. That is, the modified membrane sample has gamma sterilization stability.

Embodiment 18:

This embodiment tests the protein adsorption of the modified membrane samples described in Embodiments 10, 12, 6, and 9. Each group of three modified membrane samples is sterilized accordingly, and each group of modified membrane samples is tested. After the modified membrane samples are sterilized, the modified membrane samples are first rinsed with IPA, then rinsed thoroughly with DI water, and air-dried overnight prior to testing.

In this embodiment, the modified membrane sample is immersed in a 1N NaOH aqueous solution (pH=14) for more than 72 hours for caustic disinfection. The modified membrane sample is autoclaved at 126°C for 1 hour for autoclave sterilization. The modified membrane sample is gamma sterilized at a dose of 45 kGy or more.

In this embodiment, for convenience of comparison, the protein adsorption amount of the commercially available Durapore® PVDF membrane and the unmodified hydrophobic PES membrane, which are known for their low protein adsorption performance, are tested as references. The average protein adsorption amount of the Durapore® PVDF membrane is $36.0 \pm 10.2 \mu g/cm^2$, and the average protein adsorption amount of the unmodified hydrophobic PES membrane is $140.6 \pm 11.8 \mu g/cm^2$. The test results are shown in the following Table 7.

Table 7

| Embodiment | First crosslinking agent | | Second crosslinking agent | | Electron beam dose (kGy) | Protein adsorption amount ($\mu g/cm2$) | | | |
|---|---|---|---|---|---|---|---|---|---|
| | Name | wt% | Name | wt% | | After modification | After caustic alkali disinfection | After autoclave sterilization | After gamma sterilization |
| Embodiment 10.7: | MBAM | 0.8 | ETMPTA | 1.0 | 30 | 33.9 | 37.3 | 38.4 | 43.5 |
| Embodiment 12.7: | MBAM | 0.8 | ETMPTA | 3.0 | 30 | 34.9 | 21.6 | 27.6 | 38.1 |
| Embodiment 6.7: | MBAM | 0.4 | ETMPTA | 3.0 | 30 | 35.1 | 55.0 | 29.5 | 47.0 |
| Embodiment 9.7: | MBAM | 0.6 | ETMPTA | 3.0 | 30 | 34.3 | 39.1 | 32.5 | 26.1 |

The test results in Table 7 show that:

(1) The modified membrane sample has a protein adsorption amount that is similar to the Durapore® membrane and that is significantly lower than the unmodified hydrophobic membrane, indicating that the modification effectively reduces protein adsorption.

(2) After caustic disinfection, high pressure sterilization, and gamma sterilization, there is no significant change in the protein adsorption performance of the modified membrane sample, indicating that the modified membrane sample has caustic stability, autoclave sterilization stability, and gamma sterilization stability for protein adsorption.

(3) Although the modified membrane sample has a similar protein adsorption amount to the Durapore® membrane, as described by Charkoudian in US7648034, when the Durapore® membrane is immersed in a sodium hydroxide solution with a pH of 13 for only two hours, the water flux of the membrane decreases by 75%. That is, the Durapore® membrane does not have caustic stability. According to the test results of Embodiment 15, the modified membrane sample described in this embodiment has caustic stability. Therefore, the performance of the modified membrane sample described in this example is better than that of the Durapore® membrane.

Embodiment 19:

This embodiment provides the uses of the modified polymer membrane described in any one of Embodiments 1 to 12. In this embodiment, the modified polymer membrane is used in a filtration device. The filtration device includes a stacked filter, a cartridge filter, a capsule filter, and a spiral-wound filter.

The modified polymer membrane may be a flat-sheet membrane or a hollow fiber membrane.

Embodiment 20:

This embodiment provides a filtration device. The filtration device includes a housing, the housing includes a fluid inlet and a fluid outlet, and further includes a modified polymer membrane as described in any one of Embodiments 1 to 12.

In this embodiment, the filtration device includes a stacked filter, a cartridge filter, a capsule filter, a spiral-wound filter, etc.

The modified polymer membrane may be a flat-sheet membrane or a hollow fiber membrane.

The method for modifying a polymer membrane according to the present disclosure uses two cross-linking agents to modify the polymer membrane so as to form a 3D network on the surface and within the bulk of the polymer membrane, thereby obtaining a modified polymer membrane. The modified polymer membrane according to the present disclosure has low protein adsorption, caustic stability, autoclave sterilization stability, and gamma sterilization stability, while retaining the overall mechanical properties to meet the pleatability requirement for filter manufacturing. The method for modifying a polymer membrane and the modified polymer membrane according to the present disclosure have relatively high practical value and beneficial effects.

Clearly, the above embodiments of the present disclosure are merely examples provided to illustrate this disclosure and are not intended to limit the implementations of this disclosure. For those having ordinary skill in the art, other variations or modifications may be made based on the above description. The embodiments listed in the present disclosure do not exhaust all possible implementations, and any obvious changes or modifications derived from the technical solutions of the present disclosure shall all fall within the scope of protection of the present disclosure. All documents or literature mentioned in the present disclosure are cited by references in this application, just as if a single document is cited by reference.

## Claims

**1.** A method for modifying a polymer membrane, comprising:

pre-wetting a polymer membrane using a crosslinking agent solution, wherein the crosslinking agent solution comprises a first crosslinking agent and a second crosslinking agent;
irradiating the pre-wetted polymer membrane to initiate a crosslinking reaction between the first crosslinking agent and the second crosslinking agent on the polymer membrane, or to initiate a crosslinking reaction among the first crosslinking agent, the second crosslinking agent, and the polymer membrane; and
rinsing and drying the polymer membrane after the crosslinking reaction to obtain a modified polymer membrane.

2. The method in claim 1, wherein the polymer membrane, the first crosslinking agent, and the second crosslinking agent are each configured to generate free radicals upon irradiation, and wherein the free radicals undergo crosslinking reactions thereby forming a three-dimensional crosslinked network on a surface and within a bulk of the polymer membrane.

3. The method in claim 1, wherein the first crosslinking agent and the second crosslinking agent are each configured to generate free radicals upon irradiation, and wherein the free radicals undergo crosslinking reactions thereby forming a three-dimensional crosslinked network on a surface and within a bulk of the polymer membrane.

4. The method in claim 1, wherein the first crosslinking agent is a hydrophilic organic compound containing two or more first active reactive functional groups.

5. The method in claim 4, wherein the first active reactive functional group is a bisacrylamide group.

6. The method in claim 5, wherein the first active reactive functional group comprises at least one selected from the group consisting of N,N'-methylenebisacrylamide, and N,N'-ethylenebisacrylamide.

7. The method in claim 1, wherein the second crosslinking agent is a hydrophilic organic compound containing two or more second active reactive functional groups.

8. The method in claim 7, wherein the second active reactive functional group is an acrylate group.

9. The method in claim 8, wherein the second active reactive functional group comprises at least two acrylate bonds.

10. The method in claim 1, wherein the first crosslinking agent has a concentration in a range of 0.3 to 0.8 wt%, and wherein the second crosslinking agent has a concentration in a range of 1.0 to 3.0 wt%.

11. The method in claim 1, wherein irradiating the pre-wetted polymer membrane comprises irradiating the pre-wetted polymer membrane using at least one selected from the group consisting of electron beam, X-RAY, ultraviolet (UV) radiation, gamma radiation, plasma, and thermal energy.

12. The method in claim 11, wherein the electron beam has a dose in a range of 10 to 50 kGy.

13. The method in claim 1, wherein the rinsing operation uses an alcohol-based solution.

14. The method in claim 13, further comprising exchanging the alcohol-based solution with distilled water subsequent to the rinsing operation.

15. The method in claim 1, wherein the polymer membrane is a hydrophobic membrane, and wherein the crosslinking agent solution further comprises an aqueous solution of a low-molecular-weight alcohol.

16. The method in claim 1, wherein the polymer membrane is a microporous membrane.

17. The method in claim 16, wherein the polymer membrane comprises one selected from the group consisting of polysulfone, polyethersulfone, polyarylsulfone, polyvinylidene fluoride, polytetrafluoroethylene, cellulose acetate, cellulose nitrate, polypropylene, polyethylene, polyolefin polymer, polyamide, polyimide, acrylic polymer, and methacrylic polymer, or wherein the polymer membrane is prepared from a copolymer or - blend of more than one selected from the above group.

18. The method in claim 1, wherein the modified polymer membrane has a protein adsorption amount of less than or equal to 55 $\mu g/cm^2$.

19. The method in claim 1, wherein the modified polymer membrane has a wet time of less than or equal to 5 seconds.

20. The method in claim 1, wherein a water flux and a bubble point of the modified polymer membrane each have a change of no more than 20% compared to a water flux and a bubble point of the polymer membrane prior to modification, respectively.

**21.** The method in claim 1, wherein the modified polymer membrane has caustic stability.

**22.** The method in claim 21, wherein after caustic alkali disinfection, the modified polymer membrane has a wet time of less than or equal to 5 seconds, and changes in water flux and bubble point each less than or equal to 20%, and a protein adsorption amount of less than or equal to 55 $\mu g/cm^2$.

**23.** The method in claim 1, wherein the modified polymer membrane has autoclave sterilization stability.

**24.** The method in claim 23, wherein after autoclave sterilization, the modified polymer membrane has a wet time of less than or equal to 5 seconds, changes in water flux and bubble point of each less than or equal to 20%, and a protein adsorption amount of less than or equal to 55 $\mu g/cm^2$.

**25.** The method in claim 1, wherein the modified polymer membrane has gamma sterilization stability.

**26.** The method in claim 25, wherein after gamma sterilization, the modified polymer membrane has a wet time of less than or equal to 5 seconds, changes in water flux and bubble point each less than or equal to 20%, and a protein adsorption amount of less than or equal to 55 $\mu g/cm^2$.

**27.** A modified polymer membrane, obtained by modifying a polymer membrane using the method in any one of claims 1 to 15.

**28.** The modified polymer membrane in claim 27, wherein the polymer membrane is a microporous membrane.

**29.** The modified polymer membrane in claim 28, wherein the polymer membrane comprises one selected from the group consisting of polysulfone, polyethersulfone, polyarylsulfone, polyvinylidene fluoride, polytetrafluoroethylene, cellulose acetate, cellulose nitrate, polypropylene, polyethylene, polyolefin polymer, polyamide, polyimide, acrylic polymer, methacrylic polymer, or wherein the polymer membrane is prepared from a copolymer or blend of more than one selected from the above group.

**30.** The modified polymer membrane in claim 27, wherein the modified polymer membrane has a protein adsorption amount of less than or equal to 55 $\mu g/cm^2$.

**31.** The modified polymer membrane in claim 27, wherein the modified polymer membrane has a wet time of less than or equal to 5 seconds.

**32.** The modified polymer membrane in claim 27, a water flux and a bubble point of the modified polymer membrane each have a change of no more than 20% compared to a water flux and a bubble point of the polymer membrane prior to modification, respectively.

**33.** The modified polymer membrane in claim 27, wherein the modified polymer membrane has caustic stability.

**34.** The modified polymer membrane in claim 33, wherein after caustic alkali disinfection, the modified polymer membrane has a wet time of less than or equal to 5 seconds, and changes in water flux and bubble point each less than or equal to 20%, and a protein adsorption amount of less than or equal to 55 $\mu g/cm^2$.

**35.** The modified polymer membrane in claim 27, wherein the modified polymer membrane has autoclave sterilization stability.

**36.** The modified polymer membrane in claim 35, wherein after autoclave sterilization, the modified polymer membrane has a wet time of less than or equal to 5 seconds, changes in water flux and bubble point each less than or equal to 20%, and a protein adsorption amount of less than or equal to 55 $\mu g/cm^2$.

**37.** The modified polymer membrane in claim 27, wherein the modified polymer membrane has gamma sterilization stability.

**38.** The modified polymer membrane in claim 37, wherein after gamma sterilization, the modified polymer membrane has a wet time of less than or equal to 5 seconds, changes in water flux and bubble point each less than or equal to 20%, and a protein adsorption amount of less than or equal to 55 $\mu g/cm^2$.

**39.** The modified polymer membrane in claim 27, wherein the modified polymer membrane is applied to a filtration device.

**40.** A filtration device, comprising:

a housing, wherein the housing comprises a fluid inlet and a fluid outlet; and
the modified polymer membrane in claim 27 that is disposed in the housing.

**INTERNATIONAL SEARCH REPORT**

International application No. **PCT/CN2024/122711**

**A. CLASSIFICATION OF SUBJECT MATTER**

B01D67/00(2006.01)i; B01D71/68(2006.01)i

According to International Patent Classification (IPC) or to both national classification and IPC

**B. FIELDS SEARCHED**

Minimum documentation searched (classification system followed by classification symbols)

IPC: B01D

Documentation searched other than minimum documentation to the extent that such documents are included in the fields searched

Electronic data base consulted during the international search (name of data base and, where practicable, search terms used)

CNTXT; VEN; ENTXTC; CNKI: 聚合物, 膜, 微孔, 交联, 辐射, 辐照, 紫外, UV, 电子束, 射线, 自由基, 丙烯酸酯, 双丙烯酰胺, 蛋白质, 吸附, polymer, film, membrane, micropore, crosslink+, radiat+, irradiat+, Ultraviolet, E-Beam, ray, free radical, acrylate, bis acrylamide, protein, adsorp+

**C. DOCUMENTS CONSIDERED TO BE RELEVANT**

| Category* | Citation of document, with indication, where appropriate, of the relevant passages | Relevant to claim No. |
|---|---|---|
| PX | CN 118594275 A (ALIOTH BIOTECH (SHANGHAI) CO., LTD.) 06 September 2024 (2024-09-06)<br>claims 1-40 | 1-40 |
| X | CN 114653222 A (HANGZHOU COBETTER FILTRATION EQUIPMENT CO., LTD.) 24 June 2022 (2022-06-24)<br>description, paragraphs [0004]-[0063], and figure 7 | 1-40 |
| X | CN 102000517 A (SHANGHAI INSTITUTE OF APPLIED PHYSICS, CHINESE ACADEMY OF SCIENCES) 06 April 2011 (2011-04-06)<br>description, paragraphs [0008]-[0028] | 1-40 |
| X | CN 109569331 A (WANHUA CHEMICAL GROUP CO., LTD.) 05 April 2019 (2019-04-05)<br>description, paragraphs [0011]-[0026] | 1-40 |
| X | CN 102649029 A (SICHUAN JIURUN ENVIRONMENTAL PROTECTION TECHNOLOGY CO., LTD.) 29 August 2012 (2012-08-29)<br>description, paragraphs [0005]-[0012] | 1-40 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **21 February 2025** | **01 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/122711**

**C. DOCUMENTS CONSIDERED TO BE RELEVANT**

| Category* | Citation of document, with indication, where appropriate, of the relevant passages | Relevant to claim No. |
|---|---|---|
| X | CN 104801204 A (EMD MILLIPORE CORP.) 29 July 2015 (2015-07-29)<br>claims 1-32 | 1-40 |
| X | CN 112495191 A (SHANGHAI NORMAL UNIVERSITY) 16 March 2021 (2021-03-16)<br>description, paragraphs [0006]-[0032] | 1-40 |
| A | US 2011244215 A1 (SARTORIUS STEDIM BIOTECH GMBH) 06 October 2011 (2011-10-06)<br>entire document | 1-40 |
| A | GU, Y. et al. "Radiation-induced Cross-linking: A Novel Avenue to Permanent 3D Modification of Polymeric Membranes"<br>*Nuclear Science and Techniques,* 07 July 2021 (2021-07-07),<br>abstract | 1-40 |

Form PCT/ISA/210 (second sheet) (July 2022)

**INTERNATIONAL SEARCH REPORT**
**Information on patent family members**

International application No.
**PCT/CN2024/122711**

| Patent document cited in search report | Publication date (day/month/year) | Patent family member(s) | Publication date (day/month/year) |
|---|---|---|---|
| CN 118594275 A | 06 September 2024 | None | |
| CN 114653222 A | 24 June 2022 | None | |
| CN 102000517 A | 06 April 2011 | None | |
| CN 109569331 A | 05 April 2019 | None | |
| CN 102649029 A | 29 August 2012 | None | |
| CN 104801204 A | 29 July 2015 | US 2016051943 A1 | 25 February 2016 |
| | | ES 2661237 T3 | 28 March 2018 |
| | | US 2013056415 A1 | 07 March 2013 |
| | | EP 2401065 A1 | 04 January 2012 |
| | | EP 2401065 B1 | 13 December 2017 |
| | | JP 2012519065 A | 23 August 2012 |
| | | JP 6141597 B2 | 07 June 2017 |
| | | SG 173491 A1 | 29 September 2011 |
| | | WO 2010098867 A1 | 02 September 2010 |
| | | WO 2010098867 A8 | 28 April 2011 |
| | | SG 10201609893 SA | 27 January 2017 |
| | | JP 2016041424 A | 31 March 2016 |
| CN 112495191 A | 16 March 2021 | None | |
| US 2011244215 A1 | 06 October 2011 | US 9045602 B2 | 02 June 2015 |
| | | DE 102009004848 B3 | 15 April 2010 |
| | | EP 2705898 A1 | 12 March 2014 |
| | | EP 2705898 B1 | 25 March 2015 |
| | | JP 2012515075 A | 05 July 2012 |
| | | JP 5694192 B2 | 01 April 2015 |
| | | EP 2387453 A1 | 23 November 2011 |
| | | EP 2387453 B1 | 19 November 2014 |
| | | EP 2705897 A1 | 12 March 2014 |
| | | EP 2705897 B1 | 25 March 2015 |
| | | WO 2010081511 A1 | 22 July 2010 |
| | | US 2015157986 A1 | 11 June 2015 |
| | | US 10471394 B2 | 12 November 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4921654 A
- US 4906374 A
- US 4964989 A
- US 5019260 A
- US 4944879 A
- US 20030077435 A1, Charkoudian
- EP 1779922 A1
- US 7284668 B2
- US 2012028630 A1
- US 20110244215 A1
- US 9045602 B2
- US 7648034 B
- US 20230017950 A1